# EUROPEAN PATENT APPLICATION

(11) **EP 0 562 567 A1**
(43) Date of publication of application: **29.09.1993**
(21) Application number: 93104797.1
(22) Date of filing: 23.03.1993
(51) Int. Cl.: C01B 21/26

(54) **Ammonia oxidation catalyst**

(30) Priority: 23.03.1992 DK 383/92
(71) Applicant: Haldor Topsoe A/S, DK-2800 Lyngby (DK)
(72) Inventor: Nielsen, Poul Erik Hojlund, DK-3480 Fredensborg (DK); Johansen, Keld, DK-3600 Frederikssund (DK)
(74) Representative: Grünecker, Kinkeldey, Stockmair & Schwanhäusser Anwaltssozietät

(57) **Abstract**

A catalyst having improved mechanical resistance and high catalytic selectivity for the oxidation of ammonia to nitrogen oxides, comprising oxides of non-precious metals as its main catalytically active component, wherein the active catalytic component is supported on a monolithic structured carrier of a heat resistant material.

## Description

This invention is directed to the industrial oxidation of ammonia, and, in particular, to a catalyst active in the oxidation of ammonia and comprising oxides of non-precious metals as its main active catalytic component.

Ammonia oxidation catalysts are mostly employed in the manufacture of nitric acid by air oxidation of ammonia. In industrial nitric acid preparation processes, ammonia is in a first process step mixed with preheated air, and, subsequently, catalytically oxidized to nitrogen oxide at temperatures of 800-950°C and pressures ranging from atmospheric to about 10 bar, by the following reactions: 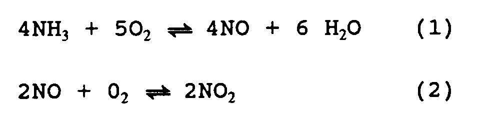
Nitrogen oxide rich effluent gas from the oxidation step is then in a later process step converted to nitric acid by absorption in water according to the reaction:

3NO₂ + H₂O → 2HNO₃ + NO (3)

Beside oxidation reactions (1) and (2), ammonia further reacts with oxygen to form nitrogen by the reaction

4NH₃ + 3O₂ → 2N₂ + 6H₂O (4)

Thus, for reasons of high yields of nitric acid, the process depends highly on the selectivity of the ammonia oxidation catalyst for the formation of nitric oxide as the main oxidation product rather than the more stable nitrogen.

Presently, the only catalysts, which show good efficiency in industrial nitric acid plants, are platinum catalysts in the form of wire screen gauze composed of platinum and stabilized by small amounts of rhodium and palladium. Further commercial catalysts comprise platinum supported on a large mesh of high-chrome steel.

Despite of their efficiency, a major drawback of the commercial platinum catalysts is their high cost and reduced lifetime caused by platinum loss, in particular, when used at elevated pressure during the ammonia oxidation step.

In order to reduce catalyst costs and to improve the overall process economy other ammonia oxidation catalysts based on much cheaper non-precious metal oxides have been suggested in the art.

Of the non-precious metal oxide catalysts only iron (II, III) and cobalt (II, III) oxide based catalyst have so far been commercially manufactured.

Although being much cheaper catalysts than the platinum catalyst, the non-precious metal oxide catalysts have to date only found very limited use in industrial nitric acid plants, probably due to a rapid loss of their selectivity. Loss of selectivity is assumed to be entirely a result of loss in activity of the non-precious metal oxide catalysts caused by reduction of exposed active catalytic surfaces as indicated by investigations of S.P.S. Andrew and G.C. Chinchen (Catalyst Deactivation, Page 141, Elsevier, Amsterdam, 1980).

These investigations have shown that a packed bed with porous tablets of Co₃O₄ losses within a short time its selectivity due to sintering and poisoning by accumulation of metal oxide dust on the catalyst surfaces.

We have now found that the above drawbacks of the non-precious metal oxide ammonia oxidation catalysts can be avoided, when supporting the oxides on a carrier with a large surface and at the same time with a large void space, whereby sintering and accumulation of detrimental dust particles on the surface of the catalyst body is reduced.

Pursuant to this finding, the catalyst of this invention having improved mechanical resistance and high catalytic selectivity for the oxidation of ammonia to nitrogen oxides and comprising oxides of non-precious metals as its main active catalytic component, is characterized in that the metal oxides are supported on a monolithic structured carrier of a heat resistant material.

The monolithic carrier may either be in the form of an extruded body with straight channels through the body, like the known honeycomb type, or fabricated from corrugated sheets of metallic or ceramic materials rolled or pilled up to a straight channel monolith.

Preferably, the monolithic carrier has channels with a hydraulic diameter of between 0.8 and 30 mm, and a void volume of between 60-85%, leading to a high surface to volume ratio and thus a very reduced tendency for accumulation of dust on the catalytic surface.

Because of reduced dust accumulation, poisoning of the catalytic surface is inhibited in the monolithic catalysts and catalytic activity preserved for a much longer operation time, than in the known particulate metal oxide catalysts.

Suitable heat resistant materials for preparation of the monolithic carrier include titania, alumina, zirconia, ceria, magnesia, rare earth oxides, ceria, lanthania, mullite, kaolin clays, silica, silicates or thin foils of alloys of iron, like nickel and chromium stainless steel.

Preferably, the monolithic carrier is fabricated from sheets of fibrous silicate paper with an average fibre diameter of 2-50 micrometer and an average fibre length of 2-60 mm. The fibrous sheets are corrugated in a conventional corrugating machine and fabricated to a monolithic carrier by rolling or piling up the corrugated sheet(s).

The active catalytic component is supported on the carrier by impregnating with a solution containing soluble salt(s) of the desired metal(s), which upon heating decompose to their oxides, or, preferably, by painting or wash coating the carrier with a slurry of the metal oxide(s).

Before the catalytic component or precursors thereof are supported on the carrier, it may be preferred to provide the carrier with one or more layers of binding material of refractory oxides, such as silica, alumina, titania, ceria, lanthania or mixtures thereof, which are deposited on the carrier by wash coating or painting.

Thus, typical procedures for manufacturing an ammonia oxidation catalyst of this invention comprise steps of corrugating sheets of the carrier material, optionally precoated with the binding material; arranging the corrugated sheets into a monolithic body; calcining the body at temperatures of between 400°C and 800°C; then coating or impregnating the body with the active catalytic component or a precursor thereof; and finally
drying and calcinating the impregnated or coated body at temperatures of between 400°C and 700°C.

As an alternative, the binding material may also be admixed with a slurry or solution containing the active catalytic component, before being supported on the corrugated sheet.

The active catalytic component used in this invention, comprises any of the non-precious metal oxides known to be selective in the oxidation of ammonia to nitrogen oxide, and includes the oxides of Co, Fe, Bi, Cr, Mn, or mixtures thereof optionally dopped with small amounts of Ce, Zn, Cd and Li.

Preferably, the component consists of Co (II, III) oxide and/or Fe (II, III) oxide.

The amount of the active catalytic component supported on the carrier may vary from about 5 to 60% by weight and preferably between 15 and 25% by weight, calculated on the final catalyst.

In utilization of the catalyst according to the invention, the catalyst is typically arranged in a cylindrical oxidation reactor operated under a pressure ranging from atmospheric to about 10 bar. A feed gas of about 0.5-11% ammonia in air is preheated to about 300°C and introduced into the reactor. After a short contact time over the catalyst, the temperature in the reactor rises to about 800°C by oxidation of ammonia with air to nitrogen oxide. The effluent gas from the reactor is then conventionally converted to nitric acid by absorption in water, as described hereinbefore.

More detailed aspects and embodiments of the invention will become apparent from the following non-limiting examples.

### Example 1

Preparation of a cobalt (II, III) oxide ammonia oxidation catalyst supported on a monolithic carrier according to the invention.

A sheet (500 mm x 500 mm) of commercial silicate rich heat resistant paper with a thickness of 0.25 mm and consisting of silica fibres with an average diameter of about 6 mm and an average length of 20 mm, as supplied by Crane & Company Inc., U.S.A., was corrugated to a corrugation height of about 2.5 mm in a conventional corrugating machine. The corrugated sheet was then provided with a liner made from the same material as the above corrugated sheet and rolled up to a straight channel monolith with an outer diameter of 50 mm and height of 500 mm.

The monolithic carrier thus obtained was coated with a slurry containing cobalt as the catalytic material together with a binder as specified below. The slurry was prepared by mixing 1200 g of Co (NO₃)₂ · 6H₂O with 250 g demineralized water and 845 g of ammonia stabilized SiO₂-binder, supplied by Monsanto Co., United Kingdom, under the Tradename "Syton T40". The slurry was ball milled at ambient temperature for 12 hours, after which the slurry was ready for use in coating the carrier.

The carrier was wash coated with the slurry through repeatedly immersing the carrier in the slurry and drying at ambient temperature until a final load of 25% by weight of cobalt nitrate on the carrier.

The coated carrier was finally activated by calcination at 450°C in air for about 2 hours, whereby cobalt nitrate was decomposed to the active catalytic Co₃O₄, resulting in a final load of about 19% by weight of Co₃O₄ on the carrier.

### Example 2

Preparation of a cobalt (II, III) oxide ammonia oxidation catalyst impregnated on a monolithic carrier according to the invention.

The monolithic carrier was prepared by a similar procedure to that described under Example 1. The carrier was then coated with an alumina binder prepared by adding to a stirred container 2.3 liter of demineralized water, 450 g alumina powder ("Versal" supplied by Kaiser Chemicals, U.S.A.), 775 g alumina powder ("Versal") precalcined at 350°C for one hour in air, 45 g HNO₃ (62% w/w), 154 g polyethylenglycol binder ("PEG 20.000", Hoechst, Germany) and 4 g of a surfactant ("Surfynol 104 E", Air Products & Chemical Inc., The Netherlands). The mixture was ball milled at ambient temperature for about 12 hours.

The binding layer was supplied on the carrier by repeated immersion into the alumina binder and drying until a final load of the binding layer corresponding to 30-40 g/m² carrier surface.

The coated carrier was then calcined at 600°C for 2 hours in air.

Finally the coated carrier was impregnated with a melt of Co (NO₃)₂ · 6H₂O at about 80°C until a load of about 19% by weight of Co(II, III) oxide on the final monolithic catalyst after air calcination at 450°C for about 2 hours.

### Example 3

The activity of the monolithic catalyst prepared under Example 2 was tested in a laboratory scale reactor consisting of a quartz tube with an inner diameter of 3.8 mm and a length of 500 mm. The reactor was loaded with fragments of the above catalyst, as further specified below.

The activity tests were carried out at isothermic conditions by placing the reactor tube in an oven provided with a thermostat.

In a first test run the reactor was loaded with 1.7 g of the above catalyst fragments giving a catalyst bed depth of 453 mm. A feedstream of ammonia/air mixture with increasing ammonia concentration was passed through the bed at 500/650°C and a space velocity of 14.700 Nl/kg cat.h. The yield of nitrogen oxides (NOₓ) obtained during the run are shown in Table 1, in which the yield is expressed in volume per cent NOₓ calculated on the amount of ammonia in the feedstream.

**Table 1**

| Temp/°C | %NH₃ feed-stream | Yield | | | Time on stream/h |
|---|---|---|---|---|---|
| | | %NO | %NO₂ | %NOₓ | |
| 500 | 0.48 | 37.9 | 9.0 | 46.9 | 32 |
| | 0.95 | 30.6 | 24.4 | 55.0 | 4 |
| | 1.42 | 25.4 | 11.7 | 37.1 | 28 |
| 650 | 0.48 | 52.7 | 9.2 | 61.9 | 32 |
| | 0.95 | 40.5 | 22.6 | 63.1 | 4 |
| | 1.42 | 35.4 | 9.2 | 44.5 | 28 |

In a second run 0.6 g of the catalyst fragments were loaded in the reactor giving a catalyst bed depth of 160 mm. A feedstream of ammonia/air mixture with increasing ammonia concentration was passed through the bed at 500/650°C and a space velocity of 41.700 Nl/kg cat.h. The NOₓ yields obtained during this run are shown in Table 2.

**Table 2**

| Temp/°C | %NH₃ feed-stream | Yield | | | Time on stream/h |
|---|---|---|---|---|---|
| | | %NO | %NO₂ | %NOₓ | |
| 500 | 0.95 | 28.8 | 9.5 | 38.3 | 52 |
| | 1.42 | 27.1 | 7.8 | 34.9 | 56 |
| 650 | 0.95 | 41.6 | 11.1 | 52.6 | 52 |
| | 1.42 | 35.0 | 10.8 | 45.8 | 56 |

## Claims

1. A catalyst having improved mechanical resistance and high catalytic selectivity for the oxidation of ammonia to nitrogen oxides, comprising oxides of non-precious metals as its main active catalytic component, wherein the active catalytic component is supported on a monolithic structured carrier of a heat resistant material.

2. The catalyst of claim 1, wherein the monolithic structured carrier has channels with a hydraulic diameter of between 0.8 and 30 mm, and a void volume of between 60 and 85%.

3. The catalyst of claim 1, wherein the heat resistant material materials comprise titania, alumina, zirconia, ceria, magnesia, rare earth oxides, ceria, lanthania, mullite, kaolin clays, silica, silicates or thin foils of alloys of iron.

4. The catalyst of claim 3, wherein the heat resistant material consists of silicate fibres with an average fibre diameter of 2-50 micrometers and an average fibre lenght of 2-60 milimeters.

5. The catalyst of claim 1, wherein the active catalytic component comprises the oxides cobalt, iron, bismuth, chromium, manganese or mixtures thereof, optionally dopped with cerium, zinc, cadmium or lithium.

6. The catalyst of claim 1, wherein the active catalytic component consists of cobalt (II, III) oxide and/or iron (II, III) oxide.

7. The catalyst of claim 1, wherein the active catalytic component is supported on the carrier in an amount of between 5 and 60% by weight, preferably between 15 and 25% by weight, calculated on the final catalyst.
